# EUROPEAN PATENT APPLICATION

(11) **EP 4 737 321 A1**
(43) Date of publication of application: **06.05.2026**
(21) Application number: 25209009.7
(22) Date of filing: 15.10.2025
(51) Int. Cl.: B64D 27/33, B64D 27/355, B64D 31/18, B64D 35/022, B64D 37/30, H01M 8/04111

(54) **FUEL CELL SYSTEMS FOR AERONAUTICAL VEHICLES**

(30) Priority: 29.10.2024 IT 202400024147; 19.05.2025 US 202519211514
(71) Applicant: GE Avio S.r.l., 10040 Rivalta di Torino (TO) (IT); General Electric Deutschland Holding GmbH, 60313 Frankfurt (DE)
(72) Inventor: CANTAGALLI, Silvia, 10040 Rivalta di Torino (IT); ERDMENGER, Rodrigo Rodriguez, 85748 Garching (DE); SPAGNOLO, Cosimo, 85748 Garching (DE); OSAMA, Mohamed, 85748 Garching (DE)
(74) Representative: Openshaw & Co.

(57) **Abstract**

A propulsion system for an aircraft includes a fan section having a fan; a turbomachine including a compressor section, a combustion section, and a turbine section arranged in serial flow order; at least one electric machine; a fuel cell assembly configured to supply power to the electric machine; and a controller including a memory and one or more processors. One or both of the turbomachine and the at least one electric machine are configured to drive rotation of the fan of the fan section. The fuel cell assembly includes at least one fuel cell, a first fluid inlet for receiving a flow of pressurized air, and a second fluid inlet for receiving a flow of fuel.

## Description

### FIELD

The present disclosure relates to fuel cell systems for aeronautical vehicles and methods of operating such fuel cell systems.

### BACKGROUND

Aeronautical vehicles use a variety of power sources to drive one or more propulsors that may generate thrust for the vehicles. Many vehicles use gas turbine engines, having a turbomachine and a rotor assembly. For example, the turbomachine includes a compressor section, a combustion section, and a turbine section in serial flow order, and the rotor assembly is configured as a fan assembly.

Fuel cells may be used as a source of power for the one or more propulsors. A compressor may be utilized for supplying air to the fuel cells. However, operation of the compressor may be limited by the altitude of the aeronautical vehicle. Accordingly, improved fuel cell systems designed for operating at a range of altitudes are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic diagram of an aeronautical vehicle in accordance with an aspect of the present disclosure.
FIG. 2 is a schematic diagram of a propulsor in accordance with an aspect of the present disclosure.
FIG. 3 is a schematic diagram of a propulsion system including a fuel cell assembly in accordance with an aspect of the present disclosure.
FIG. 4 is a perspective view of a fuel cell of the fuel cell assembly of FIG. 3 in accordance with an exemplary aspect of the present disclosure.
FIG. 5 is a schematic diagram of a propulsion system including a fuel cell assembly in accordance with an aspect of the present disclosure.
FIG. 6 is a schematic diagram of a propulsion system in accordance with an aspect of the present disclosure.
FIG. 7 is a schematic diagram of a propulsion system in accordance with an aspect of the present disclosure.
FIG. 8 is a schematic diagram of a propulsion system in accordance with an aspect of the present disclosure.
FIG. 9 is a flow diagram of a method of operating a propulsion system in accordance with an aspect of the present disclosure.
FIG. 10 is a flow diagram of a method of operating a propulsion system in accordance with an aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

The term "electric machine" may generally refer to a machine having a stator and a rotor, the rotor rotatable relative to the stator. Additionally, the electric machine may be configured in any suitable manner for converting mechanical power, such as from a turbine machine like a gas turbine engine, to electrical power, or electrical power to mechanical power. For example, the electric machine may be configured as a synchronous reluctance electric machine; a permanent magnet electric machine, such as an internal permanent magnet electric machine, and/or as a spoke permanent magnet electric machine; or a closed rotor slot induction machine. In such a manner, the electric machine may be operable to generate or utilize alternating current (AC) electric power or direct current (DC) electric power. It will further be appreciated that the stator, the rotor, or both may generally include one or more of a plurality of coils or winding arranged in any suitable number of phases, one or more permanent magnets, one or more electromagnets, etc.

As will be discussed in more detail below, fuel cells are electro-chemical devices which can convert chemical energy from a fuel into electrical energy through an electro-chemical reaction of the fuel, such as hydrogen, with an oxidizer, such as oxygen contained in the atmospheric air. Fuel cell systems may advantageously be utilized as an energy supply system because fuel cell systems may be considered environmentally superior and highly efficient when compared to at least certain existing systems. To improve system efficiency and fuel utilization and reduce external water usage, the fuel cell system may include an anode recirculation loop. As a single fuel cell can only generate about 1V voltage, a plurality of fuel cells may be stacked together (which may be referred to as a fuel cell stack) to generate a desired voltage. Fuel cells may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolytes. Each of these fuel cells may have specific benefits in the form of a preferred operating temperature range, power generation capability, efficiency, etc.

The present disclosure is generally related to fuel cell systems for aeronautical vehicles. Fuel (e.g., hydrogen) and air (e.g., oxygen gas) are supplied to a fuel cell unit of the fuel cell system and the fuel cell unit generates electrical energy by electrochemical reaction between the fuel and the air. Performance of the fuel cell unit may be impacted by the altitude of the aeronautical vehicle. For example, the fuel cell unit may require an increased supply of pressurized air at lower altitudes compared to higher altitudes. The pressurized air may be supplied to the fuel cell unit via a compressor. However, typical compressors operate with limited pressure ratios, preventing operation above certain altitudes. Accordingly, the present disclosure provides fuel cell systems and methods for supplying air to fuel cell units at increased altitudes.

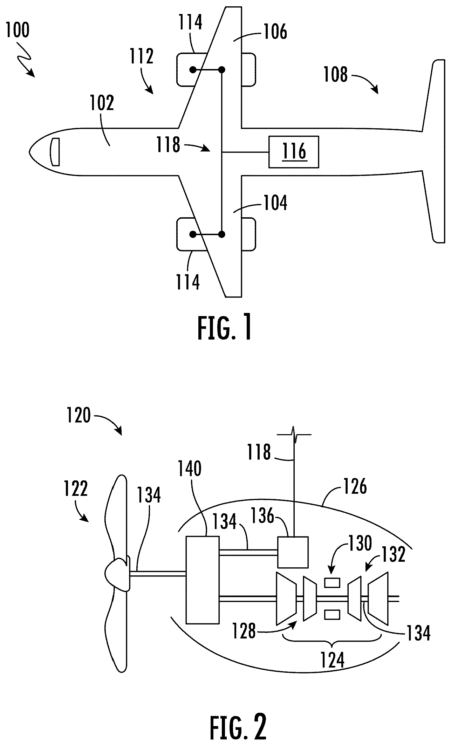

Referring now to the drawings, FIG. 1 is a schematic diagram of an aeronautical vehicle 100 in accordance with an aspect of the present disclosure. The exemplary aeronautical vehicle 100 of FIG. 1 is configured as an aircraft. The aircraft generally includes a fuselage 102 forming a main body portion of the vehicle 100, a first wing 104 extending from a port side of the aircraft and a second wing 106 extending from a starboard side of the aircraft. The first and second wings 104, 106 each extend laterally from the fuselage 102. The aircraft further includes an empennage 108.

Additionally, the vehicle 100 includes a propulsion system 112 that includes one or more propulsors 114 and one or more power sources 116. The propulsion system 112 further includes an electric power distribution bus 118 electrical coupling various components of the propulsion system 112.

FIG. 2 is a schematic diagram of a propulsor in accordance with an aspect of the present disclosure. More specifically, the propulsor of FIG. 2 is configured as a gas turbine engine 120 that may be incorporated into the exemplary propulsion system 112 of the vehicle 100 of FIG. 1, such as the one or more propulsors 114. The gas turbine engine 120 includes a fan section 122 and a turbomachine 124 drivingly coupled to the fan section 122. The turbomachine 124 generally includes a compressor section 128, a combustion section 130, and a turbine section 132 arranged in serial flow order, and one or more shafts 134 connecting one or more compressors of the compressor section 128, and one or more turbines of the turbine section 132. Moreover, the fan section 122 is coupled to the turbomachine 124 via a gearbox 140 with the one or more shafts 134. The gearbox 140 includes a plurality of gears for adjusting a rotational speed of the fan section 122 relative to a rotational speed of the one or more compressors of the compressor section 128 and the one or more turbines of the turbine section 132.

In at least one example embodiment, the gas turbine engine 120 may be configured as a turbofan engine and include an outer nacelle 126 enclosing at least in part the fan section 122 and the turbomachine 124, as shown in FIG. 2. In other example embodiments, the gas turbine engine may be configured as a turboprop. For example, the fan section 122 may not be enclosed by the outer nacelle 126 in such embodiments.

Moreover, as shown in FIG. 2, the gas turbine engine 120 further includes an electric machine 136 rotatable with the one or more shafts 134 of the fan section 122. The electric machine 136 may be coupled to the fan section 122 in parallel with the turbomachine 124. Additionally, the electric machine 136 may be configured to receive electric power from the electric power distribution bus 118 to, e.g., drive the fan of the fan section 122, as will be discussed in greater detail below. Accordingly, one or both of the turbomachine 124 and the electric machine 136 may drive rotation of the fan section 122.

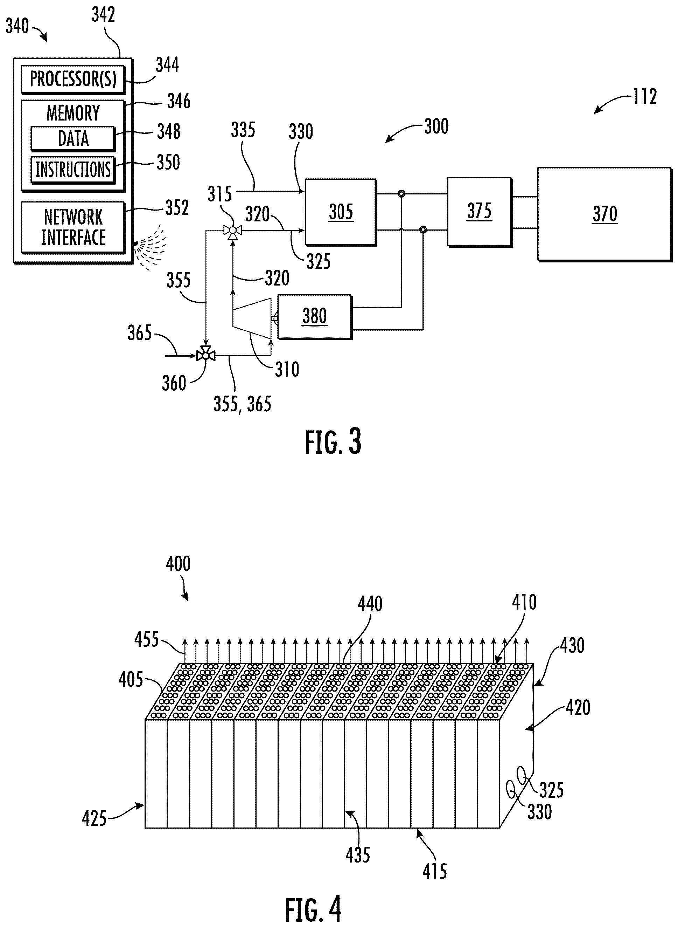

FIG. 3 is a schematic diagram of the propulsion system 112 including a fuel cell assembly 300 in accordance with an aspect of the present disclosure. The exemplary fuel cell assembly 300 may be integrated into the vehicle 100 and used with one or more propulsors, such as the propulsors 114. More specifically, the fuel cell assembly 300 may be incorporated into the propulsion system 112 of the vehicle 100 as the one or more power sources 116. Accordingly, in some example embodiments, the vehicle 100 may include a plurality of the fuel cell assemblies 300.

The fuel cell assembly 300 includes at least one fuel cell 305, at least one compressor 310, and at least one bypass valve 315 for controlling a flow of pressurized air 320 from the at least one compressor 310 to the at least one fuel cell 305. In at least one example embodiment, the bypass valve 315 may be a 3-way valve in fluid communication with the at least one fuel cell 305, the at least one compressor 310, and the ambient environment. The bypass valve 315 may enable the compressor 310 to operate at a higher compressor ratio. For example, the compressor 310 may operate at a pressure ratio greater than or equal to 5.4. The at least one compressor 310 may be a centrifugal compressor. Such a centrifugal compressor may provide high power density, isentropic efficiency, and low noise. Moreover, the at least one compressor 310 may be configured to operate at an altitude of at least 25,000 ft. For example, the altitude of the vehicle 100 including the fuel cell assembly 300 may be greater than or equal to 0 feet and less than or equal to 25,000 feet. More specifically, the at least one compressor 310 may be configured to operate at an altitude greater than or equal to 7,000 feet.

The at least one fuel cell 305 includes a first fluid inlet 325 for receiving the flow of pressurized air 320 from the at least one compressor 310. The at least one fuel cell 305 also includes a second fluid inlet 330 configured to receive a flow of fuel 335 from a fuel source (not shown). For example, the flow of fuel 335 may be a flow of hydrogen fuel in some example embodiments.

In at least one example embodiment, the at least one fuel cell 305 includes a plurality of fuel cells stacked together and defining a fuel cell stack, as will be discussed with respect to FIG. 4. Further, the at least one fuel cell 305 may be of any suitable chemistry. For example, the at least one fuel cell 305 may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc.

As shown in FIG. 3, a controller 340 may be operably coupled to the fuel cell assembly 300. For example, the controller 340 may be operably coupled to the bypass valve 315 for controlling operation of the bypass valve 315. In at least one example embodiment, as shown in FIG. 3, the controller 340 may be wirelessly connected to the bypass valve 315. In other example embodiments, the controller 340 may be operably connected to the bypass valve 315 by one or more wired electrical connections.

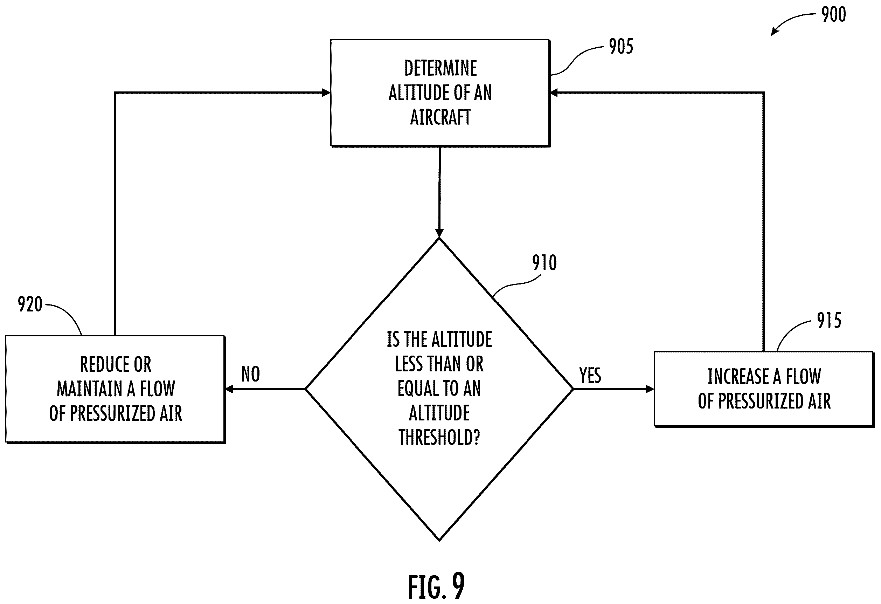

The controller 340 may include one or more computing devices 342. The one or more computing devices 342 may include one or more processors 344 and one or more memory devices 346. The one or more processors 344 may include any suitable processing device, such as a microprocessor, microcontroller, integrated circuit, logic device, and/or other suitable processing device. The one or more memory devices 346 may include one or more computer-readable media, including, but not limited to, non-transitory computer-readable media, RAM, ROM, hard drives, flash drives, and/or other memory devices. The one or more memory devices 346 can store information accessible by the one or more processors 344, including computer-readable instructions 350 that can be executed by the one or more processors 344 (e.g., method 900 described below with respect to FIG. 9). The memory devices 346 can also store data 348 that can be accessed by the processors 344. Moreover, the one or more computing devices 342 include a network interface 352 configured to communicate, for example, with the bypass valve 315, as well as with other components of the gas turbine engine 120 (FIG. 2) and the vehicle 100 (FIG. 1).

As mentioned above, the bypass valve 315 is configured to control the flow of pressurized air 320 from the at least one compressor 310 to the at least one fuel cell 305. More particularly, the controller 340 may control the flow of the pressurized air 320 to the at least one fuel cell 305 via the bypass valve 315 based on an altitude of the vehicle 100. Accordingly, the vehicle 100 may include an altitude sensor communicably coupled to the controller 340 to determine the altitude of the vehicle 100.

In at least one example embodiment, the at least one fuel cell 305 may receive an increased supply of the flow of pressurized air 320 from the at least one compressor 310 at lower altitudes. Accordingly, the controller 340 may at least partially open the bypass valve 315 to increase the supply of the pressurized air 320 to the at least one fuel cell 305 from the at least one compressor 310 based on the altitude of the vehicle 100 being less than or equal to an altitude threshold. Moreover, the supply of the flow of pressurized air 320 to the at least one fuel cell 305 may be reduced based on the altitude of the vehicle exceeding the altitude threshold. For example, the controller 340 may at least partially close the bypass valve 315 to reduce the flow of the pressurized air 320 to the at least one fuel cell 305 from the at least one compressor 310 based on the altitude of the vehicle 100 being greater than the altitude threshold. The altitude threshold may be based on the type and capacity of the at least one compressor 310 and the at least one fuel cell 305.

Any portion of the pressurized air 320 not being utilized by the at least one fuel cell 305, such as excess air 355, may be discharged from the fuel cell assembly 300. For example, as discussed above, the at least one fuel cell 305 may receive a reduced amount of the pressurized air 320 at altitudes exceeding the altitude threshold. Accordingly, the controller 340 may operate the bypass valve 315 such that the at least one fuel cell 305 is at least partially bypassed and the excess air 355 may be discharged to the ambient environment.

Additionally, or alternatively, the excess air 355 may be recirculated for use by the at least one compressor 310. For example, the fuel cell assembly 300 may include a recirculation valve 360. The recirculation valve 360 may be a 3-way valve in fluid communication with the bypass valve 315, the at least one compressor 310, and the ambient environment. As shown in FIG. 3, the recirculation valve 360 may be downstream of the bypass valve 315 and upstream of the at least one compressor 310. The recirculation valve 360 may be configured to receive the excess air 355 from the bypass valve 315 and provide the excess air 355 to the at least one compressor 310 to generate the pressurized air 320. Moreover, the recirculation valve 360 may receive ambient air 365 from the ambient environment and provide the ambient air 365 to the at least one compressor 310 to generate the pressurized air 320. In other example embodiments, the recirculation valve 360 may discharge at least a portion of the excess air 355 to the ambient environment.

In at least one example embodiment, the fuel cell assembly 300 is configured to supply power to a load 370. For example, an electrochemical reaction between the flow of the fuel 335 and the flow of the pressurized air 320 occurs within the at least one fuel cell 305 and provides an electrical power output. Accordingly, the electrical power output from the at least one fuel cell 305 may be supplied to the load 370. The load 370 may include the electric machine 136 described with respect to FIG. 2. For example, the electrical power output from the at least one fuel cell 305 may be provided to the electric machine 136 to drive rotation of the fan section 122. Accordingly, as shown in FIG. 2, one or both of the electric machine 136 (supplied with electrical power from the fuel cell assembly 300) and the turbomachine 124 may drive rotation of the fan section 122.

Moreover, a DC/DC converter 375 may be operably coupled between the at least one fuel cell 305 of the fuel cell assembly 300 and the load 370. The fuel cell assembly 300 may manage the electrical power output from the at least one fuel cell 305 with the DC/DC converter 375 to provide a specified power output to the load 370.

In additional example embodiments, at least a portion of the electrical power output from the at least one fuel cell 305 may be supplied to the at least one compressor 310. For example, an electric machine 380 may be operably coupled to the at least one compressor 310. The electric machine 380 may be configured to receive the electrical power output from the at least one fuel cell 305 and convert the electrical power into mechanical, rotational force to drive the at least one compressor 310.

FIG. 4 is a perspective view of the at least one fuel cell 305 of the fuel cell assembly 300 of FIG. 3 in accordance with an exemplary aspect of the present disclosure. As discussed above with respect to FIG. 3, the at least one fuel cell 305 may include a fuel cell stack 400. For the embodiment depicted, the fuel cell stack 400 is configured as a proton-exchange membrane ("PEM") fuel cell stack having a plurality of PEM fuel cells.

The fuel cell stack 400 shown in FIG. 4 includes a housing 405 having a combustion outlet side 410 and a side 415 opposite the combustion outlet side 410, a fuel and air inlet side 420 and a side 425 opposite the fuel and air inlet side 420, and sides 430, 435. The side 430, the side 425, and the side 415 are not visible in the perspective view of FIG. 4.

As mentioned above, the fuel cell stack 400 includes a plurality of fuel cells that are "stacked," e.g., side-by-side from one end of the fuel cell stack 400 (e.g., fuel and air inlet side 420) to another end of the fuel cell stack 400 (e.g., side 425). The combustion outlet side 410 includes a plurality of combustion outlets 440 defined by each fuel cell of the fuel cell stack 400. During operation, combustion gas 455 is directed from the combustion outlets 440 and out of the housing 405. The combustion gas 455 is generated using fuel and air that is not consumed by the fuel cells inside the housing 405 of the fuel cell stack 400.

The fuel and air inlet side 420 includes one or more fuel inlets and one or more air inlets, such as the first fluid inlet 325 and the second fluid inlet 330. Optionally, the one or more fuel inlets and the one or more air inlets can be on another side of the housing 405. Each of the one or more fuel inlets, such as the second fluid inlet 330, is fluidly coupled with a source of fuel for the fuel cell stack 400, such as one or more pressurized containers of a hydrogen-containing gas. Each of the one or more air inlets, such as the first fluid inlet 325, is fluidly coupled with a source of air for the fuel cells, such the at least one compressor 310 (FIG. 3). The first fluid inlet 325 and the second fluid inlet separately receive the air and fuel from the external sources of air and fuel, and separately direct the air and fuel into the fuel cells.

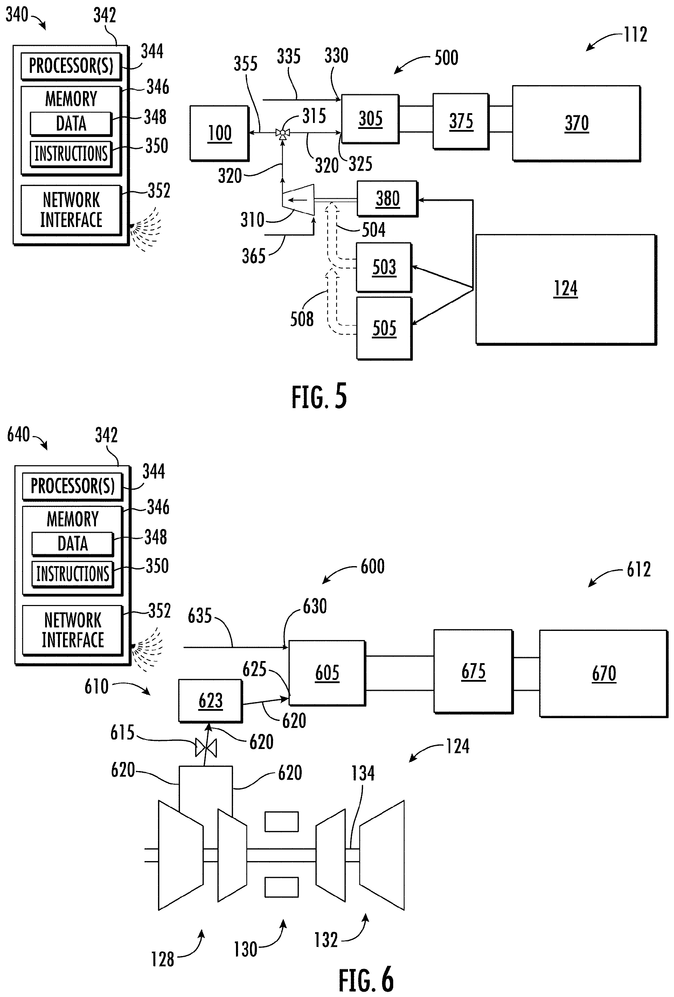

FIG. 5 is a schematic diagram of the propulsion system 112 including a fuel cell assembly 500 in accordance with an aspect of the present disclosure. The fuel cell assembly 500 may be similar or analogous to the exemplary fuel cell assembly 300 discussed above with respect to FIG. 3. For example, the fuel cell assembly 500 includes the at least one fuel cell 305, the at least one compressor 310, the at least one bypass valve 315 for controlling a flow of pressurized air 320 from the at least one compressor 310 to the at least one fuel cell 305, and the controller 340. The fuel cell assembly 500 is also configured to supply power to the load 370. Moreover, the fuel cell assembly 500 may be incorporated into the propulsion system 112 of the vehicle 100 as the one or more power sources 116. Accordingly, in some example embodiments, the vehicle 100 may include a plurality of the fuel cell assembly 500.

As discussed above with respect to FIG. 3, the bypass valve 315 is configured to control the flow of pressurized air 320 from the at least one compressor 310 to the at least one fuel cell 305. More particularly, the controller 340 may control the flow of the pressurized air 320 to the at least one fuel cell 305 via the bypass valve 315 based on an altitude of the vehicle 100. In at least one example embodiment, such as shown in FIG. 5, the bypass valve 315 may be configured to direct at least a portion of the excess air 355 not being utilized by the at least one fuel cell 305 to the vehicle 100 for aircraft utilities. The aircraft utilities may include low voltage loads.

As shown in FIG. 5, the at least one compressor 310 may receive incoming air, such as the ambient air 365, from the ambient environment to generate the pressurized air 320. In some example embodiments, a turbocharger 503, a supercharger 505, or both the turbocharger 503 and the supercharger 505 may be fluidly coupled between the turbomachine 124 and the at least one compressor 310, indicated by arrows 504, 508. The turbocharger 503 and the supercharger 505 are configured to increase the incoming air to the at least one compressor 310 from the turbomachine 124 to generate the flow of pressurized air 320. Accordingly, the turbocharger 503 and the supercharger 505 may recover hot air from the turbomachine 124 and use energy from such hot air to increase the flow of pressurized air 320 to the at least one fuel cell 305 of the fuel cell system 500. Moreover, the turbocharger 503 and the supercharger 505 may recover the hot air to support operation of the at least one compressor 310 and reduce an amount of electrical power required from the electric machine 380 to drive the at least one compressor 310. Additionally, or alternatively, the turbocharger 503 and the supercharger 505 may support operation of the at least one compressor 310 such that the need for the electric machine 380 is eliminated in some example embodiments. For example, taking enthalpy from the turbomachine 124, exhaust from the at least one fuel cell, or both may support operation of the at least one compressor 310 such that little to no electrical power is needed by the at least one compressor 310 from the electric machine 380.

In at least one example embodiment, as shown in FIG. 5, the electric machine 380 may be drivingly coupled to the turbomachine 124. In such embodiments, the electric machine 380 may be configured to convert mechanical power from the turbomachine 124, such as from the one or more shafts 134 (FIG. 2), to electrical power that may be utilized by the at least one compressor 310.

FIG. 6 is a schematic diagram of a propulsion system 612 in accordance with an aspect of the present disclosure. The exemplary propulsion system 612 may be integrated into the vehicle 100 and used with one or more propulsors, such as the propulsors 114. More specifically, the propulsion system 612 may be incorporated into the vehicle 100 as the propulsion system 112.

The propulsion system 612 includes a fuel cell assembly 600 and an air management system 610 in fluid communication with the fuel cell assembly 600. The fuel cell assembly 600 includes a plurality of fuel cells 605. The plurality of fuel cells 605 of the fuel cell assembly 600 may be of any suitable chemistry. For example, the plurality of fuel cells may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc. Moreover, the plurality of fuel cells 605 may include a plurality of the fuel cell stacks 400 discussed above with respect to FIG. 4.

Each of the fuel cells or fuel cell stacks of the plurality of fuel cells 605 includes a first fluid inlet 625 for receiving a flow of pressurized air 620 from the air management system 610 and a second fluid inlet 630 for receiving a flow of fuel 635 from a fuel source (not shown). In at least one example embodiment, the flow of fuel 635 may be a flow of hydrogen fuel.

As shown in FIG. 6, the air management system 610 may be in fluid communication with the turbomachine 124. More specifically, the air management system 610 may be in fluid communication with the compressor section 128 of the turbomachine 124. The air management system 610 includes a control valve 615 and a distribution manifold 623. The control valve 615 is configured to control the flow of pressurized air 620 from the compressor section 128 to the distribution manifold 623. The distribution manifold 623 is configured to distribute the flow of pressurized air 620 to the plurality of fuel cells 605. For example, the distribution manifold 623 may be configured to distribute the flow of pressurized air 620 to each fuel cells or fuel cell stacks of the plurality of fuel cells 605.

In other example embodiments, the control valve 615 may control the flow of the pressurized air 620 from the compressor section 128 directly without inclusion of the distribution manifold 623. In such example embodiments, one or more of the control valves 615 may be in direct fluid communication with each fuel cell or fuel cell stack of the plurality of fuel cells 605 and the compressor section 128.

A controller 640 may be operably coupled to the control valve 615 for controlling operation of the control valve 615. In at least one example embodiment, as shown in FIG. 6, the controller 640 may be wirelessly connected to the control valve 615. In other example embodiments, the controller 640 may be operably connected to the control valve 615 by one or more wired electrical connections. Moreover, the controller 640 may be similar or analogous to the exemplary controller 340 discussed above with respect to FIGS. 3 and 5.

As mentioned above, the control valve 615 is configured to control the flow of pressurized air 620 to the plurality of fuel cells 605 via the distribution manifold 623. More particularly, the controller 640 may control the flow of the pressurized air 620 to the distribution manifold 623 and the plurality of fuel cells 605 via the control valve 615 based on an altitude of the vehicle 100. The vehicle 100 may include an altitude sensor communicably coupled to the controller 640 to determine the altitude of the vehicle 100 and communicating the determined altitude to the controller 640. In at least one example embodiment, the altitude of the vehicle 100 may be greater than or equal to 0 feet and less than or equal to 25,000 feet.

In some example embodiments, the fuel cell assembly 600 may require an increased supply of the flow of pressurized air 620 from the compressor section 128 at lower altitudes, such as altitudes lower than 25,000 feet. Accordingly, the controller 640 may at least partially open the control valve 615 to increase the supply of the pressurized air 620 to the distribution manifold 623 for distribution to the plurality of fuel cells 605 based on the altitude of the vehicle 100 being less than or equal to an altitude threshold, such as less than or equal to 25,000 feet. Moreover, the supply of the flow of pressurized air 620 to the fuel cell assembly 600 may be reduced based on the altitude of the vehicle exceeding the altitude threshold. For example, the controller 640 may at least partially close the control valve 615 to reduce the flow of the pressurized air 620 to the distribution manifold 623 for distribution to the plurality of fuel cells 605 from the compressor section 128 based on the altitude of the vehicle 100 being greater than the altitude threshold. The altitude threshold may be based on the type and capacity of the compressor section 128 and the plurality of fuel cells 605.

Still referring to FIG. 6, the fuel cell assembly 600 is configured to supply power to a load 670. For example, an electrochemical reaction between the flow of the fuel 635 and the flow of the pressurized air 620 occurs within the plurality of fuel cells 605 and provides an electrical power output. The electrical power output from the plurality of fuel cells 605 may be supplied to the load 670. The load 670 may include the electric machine 136 described with respect to FIG. 2. For example, the electrical power output from the fuel cell assembly 600 may be provided to the electric machine 136 to drive rotation of the fan section 122. Accordingly, as shown in FIG. 2, one or both of the electric machine 136 (supplied with electrical power from the fuel cell assembly 600) and the turbomachine 124 may drive rotation of the fan section 122.

Moreover, a DC/DC converter 675 may be operably coupled between the plurality of fuel cells 605 and the load 670. The DC/DC converter 675 may be configured to provide a specified power output to the load 670 from the plurality of fuel cells 605.

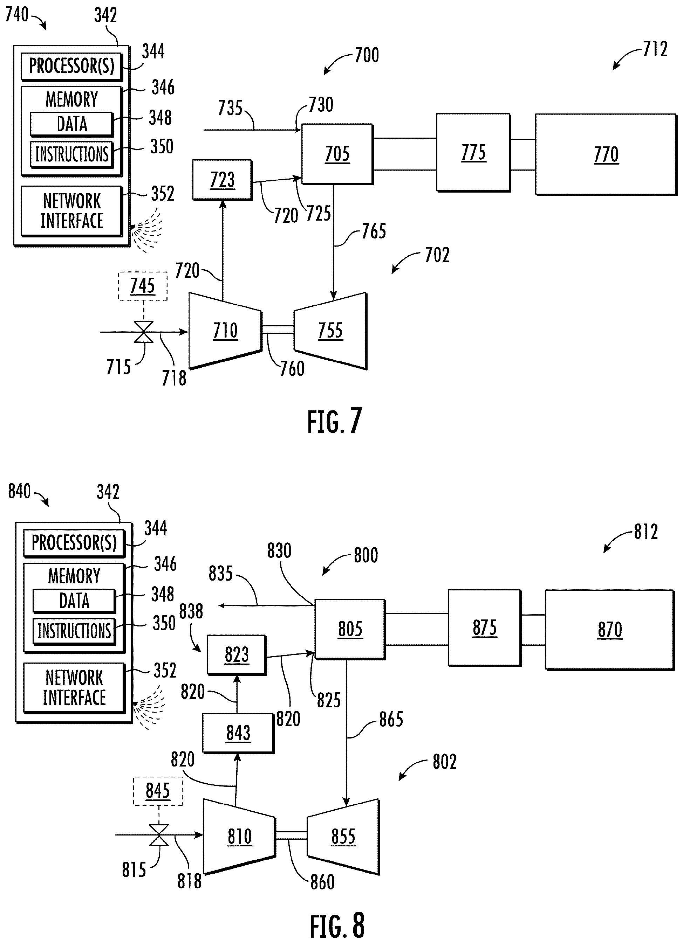

FIG. 7 is a schematic diagram of a propulsion system 712 including a fuel cell assembly 700 in accordance with an aspect of the present disclosure. The exemplary propulsion system 712 may be incorporated into the vehicle 100 of FIG. 1 as the propulsion system 112. Moreover, the fuel cell assembly 700 may be incorporated into the propulsion system 112 of the vehicle 100 as the one or more power sources 116.

The fuel cell assembly 700 includes at least one fuel cell 705, an air management system 723, and an air stream supply 702. The air stream supply 702 includes a fuel cell compressor 710 in fluid communication with the air management system 723 and a fuel cell turbine 755 drivingly coupled to the fuel cell compressor 710. The fuel cell compressor 710 may be a centrifugal compressor. Such a centrifugal compressor may provide high power density, isentropic efficiency, and low noise. Moreover, the fuel cell compressor 710 may be configured to operate at an altitude less than or equal to 25,000 ft. For example, the altitude of the vehicle 100 including the fuel cell assembly 700 may be greater than or equal to 0 feet and less than or equal to 25,000 feet.

The fuel cell turbine 755 may be drivingly coupled to the fuel cell compressor 710 by one or more shafts 760. In at least one example embodiment, the fuel cell turbine 755 is configured to receive exhaust 765 from the at least one fuel cell 705 to drive rotation of the fuel cell turbine 755. Additionally, or alternatively, the fuel cell turbine 755 may receive exhaust from the propulsor 114, such as the gas turbine engine 120, to drive rotation of the fuel cell turbine 755. In additional example embodiments, the fuel cell compressor 710 may be drivingly coupled to the turbine section 132 of the turbomachine 124 (FIG. 2) to drive rotation of the fuel cell compressor 710. Rotation of the fuel cell turbine 755 drives rotation of the fuel cell compressor 710 via the one or more shafts 760 to generate the flow of pressurized air 720.

The at least one fuel cell 705 may include a plurality of fuel cells. The plurality of fuel cells of the at least one fuel cell 705 may be of any suitable chemistry. For example, the plurality of fuel cells may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc. Moreover, the at least one fuel cell 705 may include a plurality of the fuel cell stacks 400 discussed above with respect to FIG. 4.

As shown in FIG. 7, each of the fuel cells or fuel cell stacks of the at least one fuel cell 705 includes a first fluid inlet 725 for receiving the flow of pressurized air 720 from the air management system 723 and a second fluid inlet 730 for receiving a flow of fuel 735 from a fuel source (not shown). In at least one example embodiment, the flow of fuel 735 may be a flow of hydrogen fuel.

As shown in FIG. 7, the air management system 723 may be in fluid communication with the air stream supply 702. More particularly, the air management system 723 may be in fluid communication with the fuel cell compressor 710 and configured to receive the flow of pressurized air 720 from the fuel cell compressor 710. A guide vane assembly 715 may be disposed upstream of the fuel cell compressor 710 and includes a plurality of inlet guide vanes. The guide vane assembly 715 may include an actuator 745 configured to vary a pitch angle of each of the plurality of inlet guide vanes. Modifying the pitch angle of the plurality of inlet guide vanes controls an amount of air 718 supplied to the fuel cell compressor 710 to generate the flow of pressurized air 720. For example, the fuel cell compressor 710 may require an increased supply of the air 718 at lower altitudes and a reduced supply of the air 718 at higher altitudes. More specifically, the supply of the air 718 to the fuel cell compressor 710 may be controlled by adjusting the pitch angle of the plurality of inlet guide vanes of the guide vane assembly 715 based on the altitude of the vehicle 100 relative to an altitude threshold. For example, the flow of the air 718 to the fuel cell compressor 710 may be reduced based on the altitude of the vehicle 100 being greater than the altitude threshold, and the flow of the air 718 to the fuel cell compressor 710 may be increased based on the altitude of the vehicle 100 being less than or equal the altitude threshold. The altitude threshold may be based on the type and capacity of the fuel cell compressor 710 and the at least one fuel cell 705.

Moreover, a controller 740 may be operably coupled to the actuator 745 of the guide vane assembly 715. For example, the controller 740 may drive operation of the actuator 745 such that the actuator 745 adjusts the pitch angle of the plurality of inlet guide vanes of the guide vane assembly 715 based on the altitude of the vehicle 100. In at least one example embodiment, the controller 740 is configured to rotate the plurality of inlet of guide vanes to a first position based on the altitude being less than or equal to the altitude threshold and the controller 740 is configured to rotate the plurality of inlet guide vanes to a second position based on the altitude exceeding the altitude threshold.

Additionally, the vehicle 100 may include an altitude sensor communicably coupled to the controller 740 for communicating the altitude of the vehicle 100 to the controller 740. In at least one example embodiment, as shown in FIG. 7, the controller 740 may be wirelessly connected to the actuator 745 of the guide vane assembly 715. In other example embodiments, the controller 740 may be operably connected to the actuator 745 of the guide vane assembly 715 by one or more wired electrical connections. Moreover, the controller 740 may be similar or analogous to the exemplary controller 340, 640 discussed above with respect to FIGS. 3, 5, and 6.

As shown in FIG. 7, the air management system 723 may be in fluid communication with the fuel cell compressor 710. More specifically, the air management system 723 is downstream of the fuel cell compressor 710 and upstream of the at least one fuel cell 705. The air management system 723 may include a distribution manifold configured to distribute the flow of pressurized air 720 to the at least one fuel cell 705. For example, the distribution manifold may be configured to distribute the flow of pressurized air 720 to each of the fuel cells or fuel cell stacks of the at least one fuel cell 705.

Still referring to FIG. 7, the fuel cell assembly 600 is configured to supply power to a load 770. For example, an electrochemical reaction between the flow of the fuel 735 and the flow of the pressurized air 720 occurs within the at least one fuel cell 705 and provides an electrical power output. The electrical power output from the at least one fuel cell 705 may be supplied to the load 770. The load 770 may include the electric machine 136 described with respect to FIG. 2. For example, the electrical power output from the at least one fuel cell 705 may be provided to the electric machine 136 to drive rotation of the fan section 122. Accordingly, as shown in FIG. 2, one or both of the electric machine 136 (supplied with electrical power from the fuel cell assembly 700) and the turbomachine 124 may drive rotation of the fan section 122.

Moreover, a DC/DC converter 775 may be operably coupled between the fuel cell assembly 600 and the load 770. The DC/DC converter 775 may be configured to provide a specified power output to the load 770 from the at least one fuel cell 705.

FIG. 8 is a schematic diagram of a propulsion system 812 including a fuel cell assembly 800 in accordance with an aspect of the present disclosure. The exemplary propulsion system 812 may be incorporated into the vehicle 100 of FIG. 1 as the propulsion system 112. Additionally, the fuel cell assembly 800 may be incorporated into the propulsion system 112 of the vehicle 100 as the one or more power sources 116. Moreover, the propulsion system 812 and the fuel cell assembly 800 may be similar or analogous to the propulsion system 712 and the fuel cell assembly 700 discussed with respect to FIG. 7.

For example, the fuel cell assembly 800 includes at least one fuel cell 805, an air management system 838, and an air stream supply 802. The air stream supply 802 includes a fuel cell compressor 810 in fluid communication with the air management system 838 and a fuel cell turbine 855 drivingly coupled to the fuel cell compressor 810. The fuel cell compressor 810 may be a centrifugal compressor. Such a centrifugal compressor may provide high power density, isentropic efficiency, and low noise. Moreover, the fuel cell compressor 810 may be configured to operate at an altitude of at least 25,000 ft. For example, the altitude of the vehicle 100 including the fuel cell assembly 800 may be greater than or equal to 0 feet and less than or equal to 25,000 feet.

The fuel cell turbine 855 may be drivingly coupled to the fuel cell compressor 810 by one or more shafts 860. In at least one example embodiment, the fuel cell turbine 855 is configured to receive exhaust 865 from the at least one fuel cell 805 to drive rotation of the fuel cell turbine 855. Additionally, or alternatively, the fuel cell turbine 855 may receive exhaust from the propulsor 114, such as the gas turbine engine 120, to drive rotation of the fuel cell turbine 855. In additional example embodiments, the fuel cell compressor 810 may be drivingly coupled to the turbine section 132 of the turbomachine 124 (FIG. 2) to drive rotation of the fuel cell compressor 810. Rotation of the fuel cell turbine 855 drives rotation of the fuel cell compressor 810 via the one or more shafts 860 to generate a flow of pressurized air 820.

The at least one fuel cell 805 may include a plurality of fuel cells. The plurality of fuel cells of the at least one fuel cell 805 may be of any suitable chemistry. For example, the plurality of fuel cells may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc. Moreover, the at least one fuel cell 805 may include a plurality of the fuel cell stacks 400 discussed above with respect to FIG. 4.

As shown in FIG. 8, each of the fuel cells or fuel cell stacks of the at least one fuel cell 805 includes a first fluid inlet 825 for receiving a flow of pressurized air 820 from the air management system 838 and a second fluid inlet 830 for receiving a flow of fuel 835 from a fuel source (not shown). In at least one example embodiment, the flow of fuel 835 may be a flow of hydrogen fuel.

As shown in FIG. 8, the air management system 838 includes a distribution manifold 823 and an air supply unit 843 in fluid communication with the at least one fuel cell 805. In at least one example embodiment, the air supply unit 843 may be removeable and replaceable within the vehicle 100. In some example embodiments, the air supply unit 843 may be re-fillable.

In at least one example embodiment, the air supply unit 843 is an air tank for storing at least a portion of the pressurized air 820. The air supply unit 843 may allow a size of the fuel cell compressor 810 for supplying the flow of pressurized air 820 to the at least one fuel cell 805 to be reduced. For example, the size of the fuel cell compressor 810 may be reduced because the air supply unit 843 provides an additional source of the pressurized air 820 such that the fuel cell compressor 810 may supply less of the pressurized air 820 required by the at least one fuel cell 805.

Additionally, or alternatively, the air supply unit 843 includes an oxygen tank for storing oxygen. Adding oxygen to the flow of pressurized air 820 may improve operation of the at least one fuel cell 805. For example, increasing an oxygen content of the flow of pressurized air 820 reduces nitrogen build up in the at least one fuel cell 805. Such a reduction in nitrogen may improve the durability of the at least one fuel cell 805.

The air management system 838 is configured to supply the pressurized air 820, oxygen, or both from the air supply unit 843 to the distribution manifold 823. For example, the air supply unit 843 may supply the pressurized air 820, the oxygen, or both during operation of the vehicle 100. Accordingly, the air supply unit 843 may account for fluctuations in the flow of the pressurized air 820 to the at least one fuel cell 805, such as fluctuations in the flow of the pressurized air 820 from the fuel cell compressor 810. The distribution manifold 823 is configured to distribute the flow of the pressurized air 820, the oxygen, or both to each of the cells or fuel cell stacks of the at least one fuel cell 805.

Additionally, or alternatively, the air management system 838 is configured to receive the flow of pressurized air 820 from the fuel cell compressor 810 of the air stream supply 802. The fuel cell compressor 810 may be similar or analogous to the fuel cell compressor 710 discussed above with respect to FIG. 7. For example, the guide vane assembly 715 may be disposed upstream of the fuel cell compressor 810 and include a plurality of inlet guide vanes. The guide vane assembly 815 may also include an actuator 845 configured to vary a pitch angle of each of the plurality of inlet guide vanes to control an amount of the air 718 supplied to the fuel cell compressor 810 to generate the flow of pressurized air 820, as discussed above with respect to FIG. 7. Moreover, the flow of the pressurized air 820 from the fuel cell compressor 810 may be utilized to re-fill the air supply unit 843 in some example embodiments.

Still referring to FIG. 8, a controller 840 may be operably coupled to the air supply unit 843 for controlling the flow of the pressurized air 820, the oxygen, or both to the distribution manifold 823 and the at least one fuel cell 805. Moreover, the controller 840 may be operably coupled to the actuator 845 of the guide vane assembly 815. For example, the controller 840 may drive operation of the actuator 845 such that the actuator 845 adjusts the pitch angle of the plurality of inlet guide vanes of the guide vane assembly 815 based on the altitude of the vehicle 100. The vehicle 100 may include an altitude sensor communicably coupled to the controller 740 for communicating the altitude of the vehicle 100 to the controller 740.

In at least one example embodiment, as shown in FIG. 8, the controller 840 may be wirelessly connected to the air supply unit 843, the actuator 845 of the guide vane assembly 815, or both. In other example embodiments, the controller 840 may be operably connected to the air supply unit 843, the actuator 845 of the guide vane assembly 815, or both by one or more wired electrical connections. Moreover, the controller 840 may be similar or analogous to the exemplary controller 340, 640, 740 discussed above with respect to FIGS. 3 and 5-7.

Still referring to FIG. 8, the fuel cell assembly 800 is configured to supply power to a load 870. For example, an electrochemical reaction between the flow of the fuel 835 and the flow of the pressurized air 820 occurs within the at least one fuel cell 805 and provides an electrical power output. The electrical power output from the at least one fuel cell 805 may be supplied to the load 870. The load 870 may include the electric machine 136 described with respect to FIG. 2. For example, the electrical power output from the at least one fuel cell 805 may be provided to the electric machine 136 to drive rotation of the fan section 122. Accordingly, as shown in FIG. 2, one or both of the electric machine 136 (supplied with electrical power from the fuel cell assembly 800) and the turbomachine 124 may drive rotation of the fan section 122.

Moreover, a DC/DC converter 875 may be operably coupled between the at least one fuel cell 805 and the load 870. The DC/DC converter 875 may be configured to provide a specified power output to the load 870 from the at least one fuel cell 805 of the fuel cell assembly 800.

FIG. 9 is a flow diagram of a method 900 of operating a propulsion system in accordance with an aspect of the present disclosure. The method 900 is illustrated as a collection of blocks in a logical flow chart, which represents operations that may be implemented in hardware, software, or combinations thereof. For example, the method 900 may be implemented by the exemplary controllers 340, 640, 740, 840 discussed above with respect to FIGS. 3 and 5-8. The order in which the method 900 as described is not intended to be construed as a limitation, and any number of the described blocks may be combined in any order to implement the exemplary method disclosed herein, or an equivalent alternative method. Additionally, certain blocks may be deleted from the exemplary method or augmented by additional blocks with added functionality without departing from the spirit and scope of the subject matter described herein.

In at least one example embodiment, the method 900 includes determining an altitude of an aircraft at 905. For example, the altitude of the vehicle 100 (FIG. 1) may be determined at 905. In at least one example embodiment, the vehicle 100 includes an altitude sensor for detecting the altitude of the vehicle 100 and communicating the detected altitude to one or more of the exemplary controllers 340, 640, 740, 840.

The method 900 proceeds to comparing the altitude determined at 905 to an altitude threshold at 910. If the determined altitude is less than or equal to the altitude threshold at 910, the method 900 proceeds to increasing a flow of pressurized air at 915. Increasing a flow of pressurized air at 910 may include increasing the flow of pressurized air 320, 620, 720, 720 to the exemplary fuel cell assembly 300, 500, 600, 700, 800 as discussed above with respect to FIGS. 3 and 5-8. If the determined altitude is less than or equal to the altitude threshold at 910, the method 900 proceeds to reducing or maintaining the flow of pressurized air at 920. For example, the flow of pressurized air 320, 620, 720, 720, 720 to the exemplary fuel cell assemblies 300, 500, 600, 700, 800 may be reduced or maintained, as discussed above with respect to FIGS. 3 and 5-8.

After increasing the flow of pressurized air at 915 or reducing or maintaining the flow of pressurized air at 920, the method 900 returns to determining the altitude of the aircraft at 905. Accordingly, the flow of pressurized air 320, 620, 720, 720, 720 to the exemplary fuel cell assemblies 300, 500, 600, 700, 800 may be continuously managed according to the method 900, such as by the exemplary controllers 340, 640, 740, 840.

Accordingly, the present disclosure provides various systems and methods for supplying pressurized air to a fuel cell system of an aeronautical vehicle for operation at increased altitudes. For example, the fuel cell systems described herein may operate at altitudes up to at least 25,000 feet.

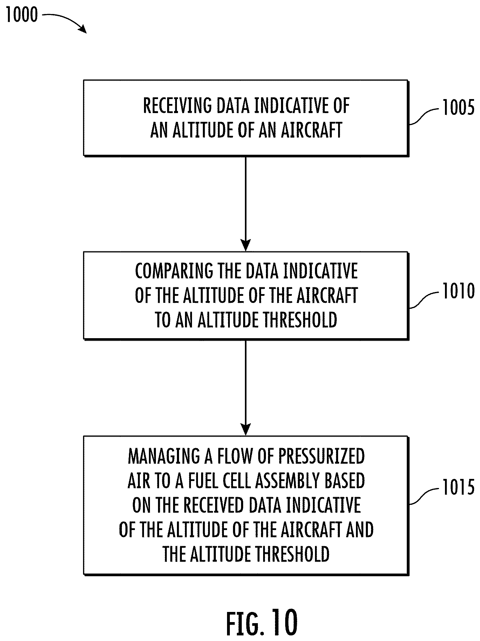

FIG. 10 is a flow diagram of a method 1000 of operating a propulsion system in accordance with an aspect of the present disclosure. For example, the method 1000 may be implemented by the exemplary controllers 340, 640, 740, 840 discussed above with respect to FIGS. 3 and 5-8.

In at least one example embodiment, the method 1000 includes receiving data indicative of an altitude of an aircraft at 1005, comparing the data indicative of the altitude of the aircraft at 1010 to an altitude threshold at 1010, and managing a flow of pressurized air to a fuel cell assembly based on the received data indicative of the altitude of the aircraft and the altitude threshold at 1015.

Receiving data indicative of an altitude of an aircraft at 1005 may include receiving data of an altitude of the vehicle 100. For example, receiving data indicative of an altitude of an aircraft at 1005 may include determining an altitude of the vehicle 100. In at least one example embodiment, the vehicle 100 includes an altitude sensor to determine the altitude of the vehicle 100. Moreover, comparing the data indicative of the altitude of the aircraft at 1010 includes comparing the determined altitude of the vehicle 100 to an altitude threshold.

Managing the flow of pressurized air to a fuel cell assembly based on the received data indicative of the altitude of the aircraft and the altitude threshold at 1015 includes managing the flow of pressurized air 320, 620, 720, 720, 720 to the exemplary fuel cell assemblies 300, 500, 600, 700, 800, as discussed above with respect to FIGS. 3 and 5-8. For example, the flow of pressurized air 320, 620, 720, 720, 720 to the exemplary fuel cell assemblies 300, 500, 600, 700, 800 may be increased based on the altitude being less than or equal to the altitude threshold. Additionally, the flow of pressurized air 320, 620, 720, 720, 720 to the exemplary fuel cell assemblies 300, 500, 600, 700, 800 may be reduced or maintained based on the altitude being greater than the altitude threshold. Moreover, as discussed with respect to FIGS. 3 and 5-8 managing the flow of pressurized air to a fuel cell assembly based on the received data indicative of the altitude of the aircraft and the altitude threshold at 1015 may include controlling the bypass valve 315 with the controller 340, controlling the control valve 615 with the controller 640, controlling the actuator 745 and the plurality of inlet guide vanes of the guide vane assembly 715 with the controller 740, and controlling the actuator 845 and the plurality of inlet guide vanes of the guide vane assembly 815 with the controller 740.

Accordingly, the present disclosure provides fuel cell systems for operating aeronautical vehicles at increased altitudes, such as greater than or equal to 0 feet and less than or equal to 25,000 feet. For example, the fuel cell systems may include a bypass valve that enables a compressor of the fuel cell system to operate at higher compressor ratios. Additionally, or alternatively, the fuel cell systems may include turbochargers and/or superchargers for supporting operation of the compressor. In some example embodiments, the fuel cell system may also receive a flow of pressurized air from a turbomachine of the aeronautical vehicle to support operation of the fuel cell system. Moreover, the fuel cell system may include a fuel cell turbine and a fuel cell compressor for supplying pressurized air to fuel cells. In such example embodiments, a guide vane assembly may control a supply of air to the fuel cell compressor. In still additional example embodiments, the fuel cell system may include an air supply unit for supplying at least a portion of pressurized air or oxygen to the fuel cells of the fuel cell system.

Further aspects are provided by the subject matter of the following clauses:

A propulsion system for an aircraft, comprising: a fan section comprising a fan; a turbomachine comprising a compressor section, a combustion section, and a turbine section arranged in serial flow order; at least one electric machine, wherein one or both of the turbomachine and the at least one electric machine are configured to drive rotation of the fan of the fan section; a fuel cell assembly configured to supply power to the electric machine, the fuel cell assembly including at least one fuel cell, a first fluid inlet for receiving a flow of pressurized air, and a second fluid inlet for receiving a flow of fuel; and a controller comprising a memory and one or more processors, the memory storing instructions that when executed by the one or more processors cause the propulsion system to perform a plurality of operations including: receiving data indicative of an altitude of the aircraft; and managing the flow of pressurized air to the fuel cell assembly in response to the received data indicative of the altitude of the aircraft.

The propulsion system of any preceding clause, wherein receiving data indicative of the altitude of the aircraft comprises determining the altitude of the aircraft and comparing the determined altitude to an altitude threshold.

The propulsion system of any preceding clause, wherein receiving data indicative of the altitude of the aircraft comprises receiving data indicative of the altitude being less than or equal to an altitude threshold, and wherein managing the flow of pressurized air to the fuel cell assembly comprises: increasing the flow of pressurized air to the fuel cell assembly based on the altitude being less than or equal to the altitude threshold.

The propulsion system of any preceding clause, wherein receiving data indicative of the altitude of the aircraft comprises receiving data indicative of the altitude being greater than an altitude threshold, and wherein managing the flow of pressurized air to the fuel cell assembly comprises: reducing the flow of pressurized air to the fuel cell assembly based on the altitude being greater than the altitude threshold.

The propulsion system of any preceding clause, wherein the fuel cell assembly comprises at least one compressor and at least one bypass valve in fluid communication with the compressor and the first fluid inlet.

The propulsion system of any preceding clause, the altitude of the aircraft is greater than or equal to 0 feet and less than or equal to 25,000 feet.

The propulsion system of any preceding clause, wherein the controller is operably coupled to the at least one bypass valve and configured to activate the at least one bypass valve based on the altitude being less than or equal to an altitude threshold and deactivate the at least one bypass valve based on the altitude exceeding the altitude threshold.

The propulsion system of any preceding clause, further comprising a recirculation valve downstream from the at least one bypass valve and upstream of the at least one compressor.

The propulsion system of any preceding clause, wherein the fuel cell assembly comprises a supercharger or a turbocharger in fluid communication with and upstream of the at least one compressor.

The propulsion system of any preceding clause, wherein the at least one electric machine comprises a first electric machine, and wherein the fuel cell assembly comprises a second electric machine mechanically coupled to the at least one compressor to drive rotation of the at least one compressor.

The propulsion system of any preceding clause, wherein the turbine section is in fluid communication with and downstream of a fluid outlet of the fuel cell.

The propulsion system of any preceding clause, wherein the turbine section is configured to receive at least a portion of exhaust gas exhausted from the turbine section.

The propulsion system of any preceding clause, wherein the fuel cell assembly comprises: an air management system in fluid communication with the at least one fuel cell and the compressor section, the air management system downstream of the compressor section and upstream of the at least one fuel cell; and a control valve in fluid communication with the air management system and the compressor section, the control valve downstream of the compressor section and upstream of the at least one fuel cell.

The propulsion system of any preceding clause, wherein: the air management system further comprises a distribution manifold in fluid communication with the control valve and the at least one fuel cell, the distribution manifold configured to distribute the flow of pressurized air to the at least one fuel cell; and the controller is operably coupled to the control valve and configured to activate the control valve based on the altitude being less than or equal to an altitude threshold and deactivate the control valve based on the altitude exceeding the altitude threshold.

The propulsion system of any preceding clause, wherein the fuel cell assembly further comprises: an air management system in fluid communication with the at least one fuel cell; and an air stream supply in fluid communication with the air management system, the air stream supply comprising: a fuel cell compressor in fluid communication with the air management system, a fuel cell turbine drivingly coupled to the fuel cell compressor, a guide vane assembly having a plurality of inlet guide vanes disposed upstream of the fuel cell compressor, and an actuator operable to vary a pitch angle of each of the plurality of inlet guide vanes; wherein the controller is operably coupled to the actuator; and wherein the managing the flow of pressurized air to the fuel cell assembly comprises rotating one or more of the plurality of inlet guide vanes via the actuator.

The propulsion system of any preceding clause, wherein: the controller is configured to rotate the plurality of inlet guide vanes to a first position based on the altitude being less than or equal to an altitude threshold; and the controller is configured to rotate the plurality of inlet guide vanes to a second position based on the altitude exceeding the altitude threshold.

The propulsion system of any preceding clause, wherein the fuel cell assembly comprises: an air management system in fluid communication with the at least one fuel cell; and an air stream supply configured to supply the flow of pressurized air to the fuel cell assembly.

The propulsion system of any preceding clause, wherein the air stream supply comprises one or both of an air tank for storing the pressurized air and an oxygen tank.

The propulsion system of any preceding clause, wherein the at least one fuel cell includes a plurality of fuel cells stacked together and forming a fuel cell stack.

The propulsion system of any preceding clause, wherein the plurality of fuel cells comprise Proton Exchange Membrane Fuel Cells (PEMFCs).

A propulsion system for an aircraft, comprising: a fan section comprising a fan; a turbomachine comprising a compressor section, a combustion section, and a turbine section arranged in serial flow order; at least one electric machine, wherein one or both of the turbomachine and the at least one electric machine are configured to drive rotation of the fan of the fan section; a fuel cell assembly configured to supply power to the electric machine, the fuel cell assembly including a plurality of fuel cells; and an air management system in fluid communication with the plurality of fuel cells and the compressor section, the air management system comprising a control valve operable to distribute an airflow from the compressor section, through the air management system, and to the plurality of fuel cells.

The propulsion system of any preceding clause, wherein the air management system further comprises a distribution manifold in fluid communication with the control valve and the plurality of fuel cells, the distribution manifold configured to distribute the airflow to the plurality of fuel cells.

The propulsion system of any preceding clause, further comprising a controller, the controller comprising a memory and one or more processors, the memory storing instructions that when executed by the one or more processors cause the propulsion system to perform a plurality of operations including: receiving data indicative of an altitude of the aircraft, managing the airflow of pressurized air to the fuel cell assembly in response to the received data indicative of the altitude of the aircraft.

The propulsion system of any preceding clause, wherein receiving data indicative of the altitude of the aircraft comprises determining the altitude of the aircraft and comparing the determined altitude to an altitude threshold.

The propulsion system of any preceding clause, wherein managing the airflow of pressurized air to the fuel cell assembly comprises increasing the airflow of pressurized air to the fuel cell assembly from the air management system based on the altitude being less than or equal to the altitude threshold.

The propulsion system of any preceding clause, wherein managing the airflow of pressurized air to the fuel cell assembly comprises reducing the airflow of pressurized air to the fuel cell assembly from the air management system based on the altitude being greater than the altitude threshold.

The propulsion system of any preceding clause, wherein the controller is operably coupled to the control valve and configured to activate the control valve based on the altitude being less than or equal to the altitude threshold and deactivate the control valve based on the altitude exceeding the altitude threshold.

The propulsion system of any preceding clause, wherein the altitude of the aircraft is greater than or equal to 0 feet and less than or equal to 25,000 feet.

The propulsion system of any preceding clause, wherein the plurality of fuel cells comprise a plurality of fuel cell stacks.

The propulsion system of any preceding clause, wherein the fuel cell assembly comprises a plurality of fuel cell assemblies.

The propulsion system of any preceding clause, wherein the plurality of fuel cells comprise a first fluid inlet for receiving a flow of pressurized air and a second fluid inlet for receiving a flow of fuel.

The propulsion system of any preceding clause, wherein the flow of fuel comprises a flow of hydrogen fuel.

The propulsion system of any preceding clause, further comprising a converter configured to provide a specified power output to the at least one electric machine from the plurality of fuel cells.

The propulsion system of any preceding clause, wherein the turbine section is in fluid communication with and downstream of a fluid outlet of the fuel cell assembly.

The propulsion system of any preceding clause, wherein the plurality of fuel cells comprise Proton Exchange Membrane Fuel Cells (PEMFCs).

A propulsion system for an aircraft, comprising: a fan section comprising a fan; a turbomachine comprising a compressor section, a combustion section, and a turbine section arranged in serial flow order; at least one electric machine, wherein one or both of the turbomachine and the at least one electric machine are configured to drive rotation of the fan of the fan section; a fuel cell assembly configured to supply power to the electric machine, the fuel cell assembly comprising: at least one fuel cell including a first fluid inlet for receiving a flow of air, a second fluid inlet for receiving a flow of fuel, and a fluid outlet, an air management system in fluid communication with the at least one fuel cell, and an air stream supply in fluid communication with the air management system, the air stream supply including a guide vane assembly having a plurality of inlet guide vanes and an actuator operable to vary a pitch angle of each of the plurality of inlet guide vanes; and a controller operably coupled to the actuator and configured to control an amount of airflow provided from the air stream supply to the air management system based on data indicative of an altitude of the aircraft.

The propulsion system of any preceding clause, wherein the air stream supply comprises: a fuel cell compressor in fluid communication with the air management system; and a fuel cell turbine drivingly coupled to the fuel cell compressor.

The propulsion system of any preceding clause, wherein the fuel cell turbine is drivingly coupled to the fuel cell compressor via one or more rotatable shafts.

The propulsion system of any preceding clause, wherein the fuel cell turbine is in fluid communication with and downstream of the fluid outlet of the at least one fuel cell.

The propulsion system of any preceding clause, wherein the fuel cell turbine is configured to receive at least a portion of exhaust gas exhausted from at least one fuel cell.

The propulsion system of any preceding clause, wherein the controller comprises a memory and one or more processors, the memory storing instructions that when executed by the one or more processors cause the propulsion system to perform operations including: receiving the data indicative of the altitude of the aircraft; and driving the actuator in response to the received data to control the amount of airflow provided from the air stream supply to the air management system.

The propulsion system of any preceding clause, wherein: the controller is configured to rotate the plurality of inlet guide vanes to a first position based on the altitude being less than or equal to an altitude threshold; and the controller is configured to rotate the plurality of inlet guide vanes to a second position based on the altitude exceeding the altitude threshold.

The propulsion system of any preceding clause, wherein rotating the plurality of inlet guide vanes to the first position comprises increasing the flow of pressurized air to the fuel cell assembly.

The propulsion system of any preceding clause, wherein rotating the plurality of inlet guide vanes to the second position comprises reducing the flow of pressurized air to the fuel cell assembly.

The propulsion system of any preceding clause, wherein the air management system comprises a distribution manifold configured to distribute the flow of pressurized air to the at least one fuel cell.

The propulsion system of any preceding clause, wherein the altitude of the aircraft is greater than or equal to 0 feet and less than or equal to 25,000 feet.

The propulsion system of any preceding clause, wherein the at least one fuel cell comprises a plurality of fuel cell stacks.

The propulsion system of any preceding clause, wherein the fuel cell assembly comprises a plurality of fuel cell assemblies.

The propulsion system of any preceding clause, wherein the flow of fuel comprises a flow of hydrogen fuel.

The propulsion system of any preceding clause, further comprising a converter configured to provide a specified power output to electric machine from the at least one fuel cell.

The propulsion system of any preceding clause, wherein the plurality of fuel cells comprise Proton Exchange Membrane Fuel Cells (PEMFCs).

A propulsion system for an aircraft, comprising: a fan section comprising a fan; a turbomachine comprising a compressor section, a combustion section, and a turbine section arranged in serial flow order; at least one electric machine, wherein one or both of the turbomachine and the at least one electric machine are configured to drive rotation of the fan of the fan section; and a fuel cell assembly configured to supply power to the electric machine, the fuel cell assembly comprising: at least one fuel cell including a first fluid inlet for receiving a flow of pressurized air, a second fluid inlet for receiving a flow of fuel, and a fluid outlet, an air management system in fluid communication with the at least one fuel cell, and an air stream supply configured to supply a flow of pressurized air to the air management system, the at least one fuel cell, or both the air management system and the at least one fuel cell.

The propulsion system of any preceding clause, wherein the air management system comprises: a distribution manifold in fluid communication with the at least one fuel cell; and an air supply unit in fluid communication with the distribution manifold and the air stream supply.

The propulsion system of any preceding clause, wherein the air supply unit is removably and replaceable.

The propulsion system of any preceding clause, wherein the air supply unit is refillable.

The propulsion system of any preceding clause, wherein the air supply unit comprises an air tank for storing the pressurized air.

The propulsion system of any preceding clause, wherein the air supply unit comprises an oxygen tank.

The propulsion system of any preceding clause, wherein the air stream supply comprises: a fuel cell compressor in fluid communication with the air management system; a fuel cell turbine drivingly coupled to the fuel cell compressor; a guide vane assembly having a plurality of inlet guide vanes disposed upstream of the fuel cell compressor; and an actuator operable to vary a pitch angle of each of the plurality of inlet guide vanes.

The propulsion system of any preceding clause, further comprising a controller operably coupled to the actuator and comprising a memory and one or more processors, the memory storing instructions that when executed by the one or more processors cause the propulsion system to perform operations including: receiving data indicative of an altitude of the aircraft; and driving the actuator in response to the received data to control an amount of airflow provided from the air stream supply to the air management system.

The propulsion system of any preceding clause, wherein: the controller is configured to rotate the plurality of inlet guide vanes to a first position based on the altitude being less than or equal to an altitude threshold; and the controller is configured to rotate the plurality of inlet guide vanes to a second position based on the altitude exceeding the altitude threshold.

The propulsion system of any preceding clause, wherein rotating the plurality of inlet guide vanes to the first position comprises increasing the flow of pressurized air to the fuel cell assembly.

The propulsion system of any preceding clause, wherein rotating the plurality of inlet guide vanes to the second position comprises reducing the flow of pressurized air to the fuel cell assembly.

The propulsion system of any preceding clause, wherein the altitude of the aircraft is greater than or equal to 0 feet and less than or equal to 25,000 feet.

The propulsion system of any preceding clause, wherein the at least one fuel cell includes a plurality of fuel cells stacked together and forming a fuel cell stack.

The propulsion system of any preceding clause, wherein the fuel cell assembly comprises a plurality of fuel cell assemblies.

The propulsion system of any preceding clause, wherein the flow of fuel comprises a flow of hydrogen fuel.

The propulsion system of any preceding clause, wherein the plurality of fuel cells comprise Proton Exchange Membrane Fuel Cells (PEMFCs).

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A propulsion system (112) for an aircraft (100), comprising:
a fan section (122) comprising a fan;
a turbomachine (124) comprising a compressor section (128), a combustion section (130), and a turbine section (132) arranged in serial flow order;
at least one electric machine (136) , wherein one or both of the turbomachine (124) and the at least one electric machine (136) are configured to drive rotation of the fan of the fan section (122);
a fuel cell assembly (300) configured to supply power to the electric machine (136), the fuel cell assembly (300) including at least one fuel cell (305), a first fluid inlet (325) for receiving a flow of pressurized air (320), and a second fluid inlet (330) for receiving a flow of fuel (335); and
a controller (340) comprising a memory (346) and one or more processors (344), the memory (346) storing instructions (350) that when executed by the one or more processors (344) cause the propulsion system (112) to perform a plurality of operations including:
receiving data indicative of an altitude of the aircraft (100); and
managing the flow of pressurized air (320) to the fuel cell assembly (300) in response to the received data indicative of the altitude of the aircraft (100).

2. The propulsion system (112) of claim 1, wherein receiving data indicative of the altitude of the aircraft (100) comprises determining the altitude of the aircraft (100) and comparing the determined altitude to an altitude threshold.

3. The propulsion system (112) of any preceding claim, wherein receiving data indicative of the altitude of the aircraft (100) comprises receiving data indicative of the altitude being less than or equal to an altitude threshold, and wherein managing the flow of pressurized air (320) to the fuel cell assembly (300) comprises:
increasing the flow of pressurized air (320) to the fuel cell assembly (300) based on the altitude being less than or equal to the altitude threshold; and
reducing the flow of pressurized air (320) to the fuel cell assembly (300) based on the altitude being greater than the altitude threshold.

4. The propulsion system (112) of any preceding claim, wherein:
the fuel cell assembly (300) comprises at least one compressor (310) and at least one bypass valve (315) in fluid communication with the compressor and the first fluid inlet (325); and
the altitude of the aircraft (100) is greater than or equal to 0 feet and less than or equal to 25,000 feet.

5. The propulsion system (112) of claim 4, wherein the controller (340) is operably coupled to the at least one bypass valve (315) and configured to activate the at least one bypass valve (315) based on the altitude being less than or equal to an altitude threshold and deactivate the at least one bypass valve (315) based on the altitude exceeding the altitude threshold.

6. The propulsion system (112) of claim 5, further comprising a recirculation valve (360) downstream from the at least one bypass valve (315) and upstream of the at least one compressor (310).

7. The propulsion system (112) of claim 4, wherein the fuel cell assembly (300) comprises a supercharger (505) or a turbocharger (503) in fluid communication with and upstream of the at least one compressor (310).

8. The propulsion system (112) of claim 4, wherein the at least one electric machine (136) comprises a first electric machine (136), and wherein the fuel cell assembly (300) comprises a second electric machine (380) mechanically coupled to the at least one compressor (310) for driving rotation of the at least one compressor (310).

9. The propulsion system (112) of any preceding claim, wherein the fuel cell assembly (300) comprises:
an air management system (610) in fluid communication with the at least one fuel cell (305) and the compressor section (128), the air management system (610) downstream of the compressor section (128) and upstream of the at least one fuel cell (305); and
a control valve (615) in fluid communication with the air management system (610) and the compressor section (128), the control valve (615) downstream of the compressor section (128) and upstream of the at least one fuel cell (305).

10. The propulsion system (112) of claim 9, wherein:
the air management system (610) further comprises a distribution manifold (623) in fluid communication with the control valve (615) and the at least one fuel cell (305), the distribution manifold (623) configured to distribute the flow of pressurized air (320) to the at least one fuel cell (305); and
the controller (340) is operably coupled to the control valve (615) and configured to activate the at control valve (615) based on the altitude being less than or equal to an altitude threshold and deactivate the control valve (615) based on the altitude exceeding the altitude threshold.

11. The propulsion system (112) of any preceding claim, wherein the fuel cell assembly (300) further comprises:
an air management system (610) in fluid communication with the at least one fuel cell (305); and
an air stream supply (702) in fluid communication with the air management system (610), the air stream supply (702) comprising:
a fuel cell compressor (710) in fluid communication with the air management system (610),
a fuel cell turbine (755) drivingly coupled to the fuel cell compressor (710),
a guide vane assembly (715) having a plurality of inlet guide vanes disposed upstream of the fuel cell compressor (710), and
an actuator (745) operable to vary a pitch angle of each of the plurality of inlet guide vanes;
wherein the controller (340) is operably coupled to the actuator (745); and
wherein the managing the flow of pressurized air (320) to the fuel cell assembly (300) comprises rotating one or more of the plurality of inlet guide vanes via the actuator (745).

12. The propulsion system (112) of claim 11, wherein:
the controller (340) is configured to rotate the plurality of inlet guide vanes to a first position based on the altitude being less than or equal to an altitude threshold; and
the controller (340) is configured to rotate the plurality of inlet guide vanes to a second position based on the altitude exceeding the altitude threshold.

13. The propulsion system (112) of claim 1, wherein the fuel cell assembly (300) comprises:
an air management system (610) in fluid communication with the at least one fuel cell (305), the air management system (610) upstream of the at least one fuel cell (305); and
an air stream supply (843) configured to supply the flow of pressurized air (320) to the fuel cell assembly (300).

14. The propulsion system (112) of claim 13, wherein the air stream supply (702) comprises one or both of an air tank for storing the pressurized air (320) or an oxygen tank.

15. The propulsion system of any preceding claim, wherein the at least one fuel cell (305) comprise Proton Exchange Membrane Fuel Cells (PEMFCs).
